# EUROPÄISCHE PATENTSCHRIFT

(11) **EP 0 659 063 B1**
(45) Veröffentlichungstag und Bekanntmachung des Hinweises auf die Patenterteilung: **20.08.1997**
(21) Anmeldenummer: 93909758.0
(22) Anmeldetag: 10.06.1993
(51) Int. Cl.: A61C 13/265

(54) **EXTRACORONALES GESCHIEBE**
EXTRACORONAL ATTACHMENT
ATTACHEMENT EXTRACORONAL

(43) Veröffentlichungstag der Anmeldung: 28.06.1995
(73) Patentinhaber: CENDRES ET METAUX S.A., CH-2501 Bienne (CH)
(72) Erfinder: STURZEIS, Martin, A-1130 Wien (AT); BLUEMLI, Markus, CH-2502 Biel (CH); GUGLIELMETTI, Silvio, CH-6952 Canobbio (CH)
(74) Vertreter: AMMANN PATENTANWAELTE AG BERN
(86) Internationale Anmeldenummer: CH9300149
(87) Internationale Veröffentlichungsnummer: WO9428822

(56) Entgegenhaltungen:
- DE-A- 3 540 049
- DE-U- 8 626 750
- DENTAL LABOR, XXXII, Heft 10/84, Seiten 1145-1147

## Beschreibung

Die vorliegende Erfindung betrifft ein extracoronales, mit Friktion arbeitendes Geschiebe gemäss Oberbegriff von Patentanspruch 1.

Ein solches Geschiebe ist aus der Druckschrift "dental labor", XXXII, Heft 10/84, Seiten 1145-1147 bekannt, wobei eine Kunststoffmatrize als Dublierhilfe verwendet wird und auch ein Friktionsteil vorhanden ist. Bei diesem Geschiebe ist festzustellen, dass die Haftung und Führung der Matrize mit dem Prothesenteil an der Patrize ohne weitere Massnahmen zu wünschen lässt und dass daher zu jedem Geschiebe individuell ein aufwendig zu fertigender Umlauf angefertigt und angepasst werden muss.

Aus der EP-A1-0'203'298 ist ein dentales Geschiebe bekannt geworden, das kompliziert aufgebaut ist, da es drei verschiedene Funktionen ausüben kann oder soll. Weiterhin werden bei der Herstellung keine Dublierhilfsteile verwendet, da auch keine eigentliche Patrize mit Retentionsteil vorhanden ist, sondern ein Auge, um das Sekundärteil, die Matrize, aufzunehmen. Das Sekundärteil ist im wesentlichen mittels einem in das Auge einzuschraubende Augenteil auf verschiedene Arten befestigbar, um die verschiedenen Funktionen wahrnehmen zu können. Die ganze Anmeldung ist darauf gerichtet, die Verbindung Auge-Augenteil zu verbessern. Am Primärteil sind seitliche Führungsnuten zur Aufnahme von entsprechenden Führungswulsten am Sekundärteil angeordnet, wobei die Führungswulste und die Führungsnuten einen Querschnitt in Gestalt eines Kreisabschnittes haben, dessen Bogen grösser als der halbe Kreisumfang ist. Dadurch wird das Anpassen der Teile derart schwierig, dass sich dieses Geschiebe auf dem Markt nicht durchsetzen konnte.

Aus der EP-A-0 298 909 des gleichen Anmelders ist ausserdem ein extracoronales Geschiebe bekannt, bei dem die Matrize einen Kunststoffeinsatz aufweist, der aus einem Friktionsteil, der aber nur einen Teil der Patrize umschliesst, und einem Befestigungsteil besteht, der in die Matrize eingelassen ist, wobei die Friktion mittels einer Schraube einstellbar ist. Dieses Geschiebe weist zwar eine Stabilisierungsnut an der Patrize auf, um die Prothese derart zu stabilisieren, dass kein Umlauf mehr anzufertigen ist, doch muss der Prothesenteil jeweils durch den Zahntechniker eingepasst werden, was sehr zeitaufwendig ist.

Die US-A-4 362 509 offenbart, obschon sie lediglich intracoronale Geschiebe betrifft, ebenfalls einen Friktionsteil zwischen Matrize und Patrize, der in die Matrize eingebettet ist.

Das Dokument DE-A1-3'540'049 beschreibt ein Verfahren zur Herstellung einer Geschiebeverbindung, bei dem während des Formvorgangs ein sogenannter Platzhalter zwischen Matrize und Patrize eingeschoben wird. Der Platzhalter dient zur Erzeugung eines überdimensionierten Freiraumes zwischen den genannten beiden Teilen, der nach Anpassung mit Kunststoff ausgegossen wird. Ein solches Verfahren ist umständlich, und normalisierte Einsatz-Kunststoffteile lassen sich nicht im voraus erstellen.

Den bekannten Friktionsteilen ist gemeinsam, dass sie speziell auf Fassung hergestellt werden müssen, was bei den geringen Abmessungen äusserst schwierig ist. Gewisse Toleranzen können mit dem Friktionsteil gemäss der erwähnten EP-Anmeldung Nr. 0'298'909 ausgeglichen werden, erfordern aber eine besondere Form der Matrize und eine zusätzliche seitliche Schraube mit Gewinde.

Ausgehend von diesem bekannten Stand der Technik ist es Aufgabe der Erfindung, ein extracoronales Geschiebe mit Friktionsteil zu schaffen, das unter Vermeidung der Nachteile der vorbekannten Geschiebe einfacher herzustellen ist und nicht nur die individuelle Anfertigung eines Umlaufs sondern auch die nachträgliche Einpassung des Prothesenteils an die Patrize sowie die Verwendung einer Schraube erübrigt.

Diese Aufgabe wird mit dem Geschiebe gelöst, das im unabhängigen Patentanspruch 1 definiert ist. Besondere Ausführungsformen bilden den Gegenstand der abhängigen Ansprüche.

Obwohl die Herstellung von Geschieben und Gerüstprothesen dem Fachmann bekannt ist, wird es als erforderlich erachtet, die einzelnen Herstellungsschritte ganz kurz darzustellen, da sich der Erfindungsgedanke, die praktische Ausführung und die Vorteile der Erfindung zum Teil aus dieser Herstellung ersehen lassen.

Im Folgenden wird nun ein kurzer Abriss der Herstellungsschritte am Beispiel eines Kronenzahns gegeben, wobei für die Erfindung unwichtige Details wie Polieren, Zusammensetzung der Guss- und Modelliermassen, Legierungen, Art der verwendeten Kunststoffe und Wachse, Verfahrensparameter usw. weggelassen sind, da sie dem Fachmann bestens bekannt sind. Es ist hervorzuheben, dass ein Teil der Schritte der Herstellung neu ist oder eine erfindungsgemässe Abwandlung bekannter Schritte darstellt.
1. Herstellen eines Gipspositivabdrucks des Zahnstumpfs durch Herstellen eines Negativabdrucks und Ausgiessen mit Gips;
2. Herstellung der Krone mit angesetzter Patrize durch Modellieren der Krone und Ansetzen einer Plastikpatrize oder einer Patrize aus einer nicht oxidierenden Goldlegierung (mit Hilfe eines Parallelometers), Herstellung eines Eingusskanals, Umhüllen mit Einbettmasse, Ausbrennen und Ausgiessen mit Metall;
3. Aufsetzen der Krone mit Patrize auf das Gipsmodell (Schritt 1) und Aufsetzen eines die Patrize umgreifenden Dublierhilfsteils in Form einer Hülse mit entsprechenden, der Patrizenform angepassten Innenformen und -abmessungen, die aus mundbeständigem, nicht ausbrennbarem Kunststoff besteht. Die Wandstärke der Hülse ist nicht erfindungswesentlich; sie liegt in der Grössenordnung von 0,15 bis 0,3 mm.
   Dieses Dublierhilfsteil, dessen Funktionen nachstehend näher beschrieben werden, wird zusammen mit der oben erwähnten Plastikpatrize oder Metallpatrize hergestellt und mit ihr auf Passung gearbeitet. Es werden mehrere Hilfsteile zur Verfügung gestellt, die sich nur in ihrer Wandstärke, d.h. in ihren Innenabmessungen unterscheiden; sie werden zur besseren Unterscheidung zweckmässig verschieden gefärbt. Für die weiteren Arbeiten wird bevorzugt das Dublierhilfsteil mit dem grössten Innendurchmesser, das beispielsweise rot gefärbt ist, verwendet.
4. Erstellen eines Duplikatmodells durch Ausblocken des Gipsmodells mit Wachs, Übergiessen mit Modelliermasse und Härtenlassen und anschliessendes Erstellen eines Einbettmassemodells durch Ausgiessen der Dubliermasse mit Einbettmasse;
5. Aufsetzen eines speziellen Matrizengehäuses aus ausbrennbarem Kunststoff auf die Patrize, die durch Aufschieben des genannten Dublierhilfsteils vergrössert wurde, Aufmodellieren des Modellgussgerüstes der Prothese aus Wachs auf das Einbettmassemodell, Übergiessen mit Einbettmasse, Abbinden, Ausbrennen, mit Metall ausgiessen; man erhält ein Modellgussgerüst mit ausgeformtem Matrizengehäuse, und das Modellgussgerüst stellt nach Endbearbeitung die fertige Prothese dar.

Das oben schon besprochene Dublierhilfsteil wird nun als Gleit- bzw. Friktionsteil in das fertige Matrizengehäuse eingeschoben. Durch geeignete Wahl der Grösse der verschiedenen Hilfsteile, die farblich unterschiedlich sind, können erstens die Toleranzen beim Zusammenwirken von Patrize und Matrize gut ausgeglichen und andererseits die gewünschten Kräfte beim Einschieben und Abziehen der Prothese bequem und ohne Zuhilfenahme mechanischer Teile oder Vorrichtungen eingestellt werden.

Weiter steht ein Matrizengehäuse mit Retentionen für den Kunststoff aus einer Goldlegierung zur Verfügung. Durch Verwendung dieses Teils anstatt des vorher genannten Matrizengehäuses aus ausbrennbarem Kunststoff kann die gleiche zahntechnische Arbeit unter Weglassen der oben unter Punkt 4 und Punkt 5 beschriebenen Arbeitsschritte hergestellt werden, was zur weiteren Vereinfachung beiträgt.

In der Zeichnung sind Ausführungsformen der drei wichtigsten Teile des erfindungsgemässen Geschiebes gezeigt. Es stellen dar:
- Fig. 1: eine Draufsicht der Patrize,
- Fig. 2: eine Seitenansicht der Patrize gemäss Fig. 1,
- Fig. 3: eine Draufsicht des Dublierhilfsteils, das auch als Friktionsteil dient,
- Fig. 4: eine Seitenansicht des Teiles gemäss Fig. 3,
- Fig. 5: eine Draufsicht der Matrize,
- Fig. 6: einen Schnitt der Matrize gemäss Fig. 5 in der Ebene VI-VI der Fig. 5, und
- Fig. 7: einen Querschnitt des zusammengesetzten Geschiebes.

Alle Figuren stellen Teile des erfindungsgemässen Geschiebes in starker Vergrösserung dar. Sie sind in der Wirklichkeit mit den Abmessungen von Zähnen zu vergleichen.

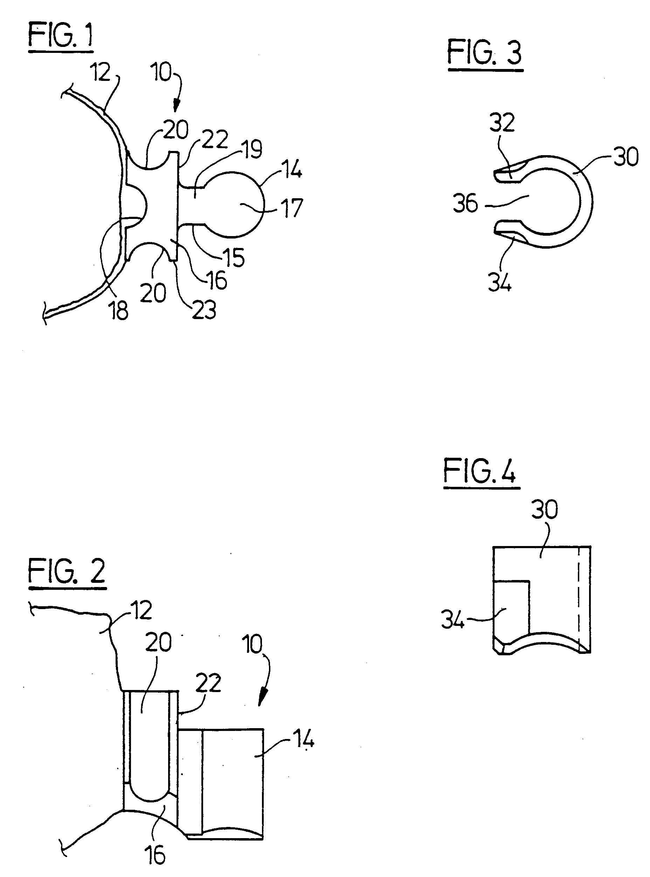

In Fig. 1 ist eine Draufsicht der Patrize 10 dargestellt, die an einer Krone 12 angewachst ist, wobei Einzelheiten der Verbindung nicht gezeigt sind. Die Patrize 10 besteht aus einem Retentionsteil 14, der im wesentlichen eine Form besitzt, wie sie aus der EP-A-0 330 607 bekannt ist, nämlich einen über einen Steg 19 mit dem Befestigungsteil 16 verbundenen Kreiszylinder 17. Das Befestigungsteil 16 besitzt im wesentlichen die Form eines Blockes, der eine Befestigungsnut 18 und an den Seitenflächen je eine Stabilisierungsnut 20 aufweist. Zwischen Befestigungsteil 16 und Retentionsteil 14 befindet sich eine ebene Stabilisierungsfläche 22. Die frontal seitliche Abschlussfläche 23 am Befestigungsteil vor der Stabilisierungsnut 20 bildet ebenfalls eine Stabilisierungsfläche.

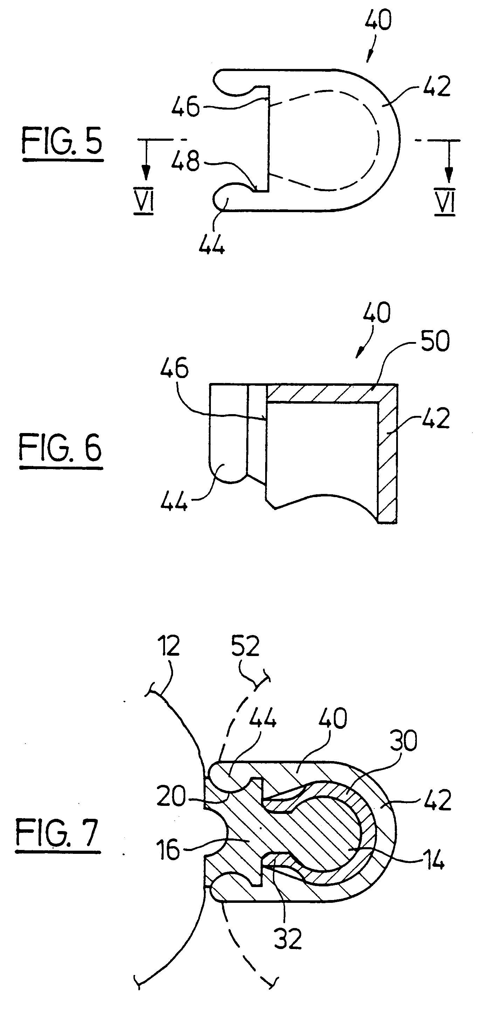

Fig. 3 und 4 zeigen eine Ausführungsform des Dublierhilfsteils in Draufsicht und Seitenansicht. Es handelt sich um eine seitlich zum Retentionsteil der Patrize offene Rohrhülse 30, die, an die Öffnung 36 des Ringes anschliessend, Fortsätze 32 besitzt, deren Innenflächen am Hals 15 der Patrize (s. Fig. 1) und deren Aussenflächen an den entsprechenden Innenflächen der noch zu beschreibenden Matrize zum Anliegen kommen, wie aus Fig. 7 hervorgeht. Am unteren Teil besitzt das Dublierhilfsteil kleine Ausnehmungen 34, die beim Einsetzen des Teils in die Matrize in entsprechende Vorsprünge der letzteren eingreifen, um ein Herausziehen des Dublierhilfsteils, das jetzt das Friktionsteil ist, aus der Matrize beim Gebrauch zu verhindern.

Die Matrize ist in den Fig. 5 und 6 dargestellt. Wie schon aus der Beschreibung ihrer Herstellung hervorgeht, entsprechen ihre Innenflächen einesteils genau den Aussenflächen des Retentionsteils der Patrize und andererseits den Aussenflächen des einzusetzenden Friktionsteils. Die Matrize weist eine Ringwandung 42, Verbindungsleisten 44 und ebene Anlageflächen 46 und 48 auf. Die Verbindungsleisten 44 arbeiten mit den bereits beschriebenen Stabilisierungsnuten 20 an der Patrize zusammen. Die Anlageflächen 46 und 48 kommen beim Eingliedern des Geschiebes an die entsprechenden Stabilisierungsflächen 22, 23 der Patrize zur Anlage. Ausserdem besitzt die Matrize eine obere Abschlusswandung 50, wodurch die Matrize die Form eines Gehäuses erhält.

Schliesslich zeigt Fig. 7 im Schnitt das zusammengesetzte Geschiebe. Man erkennt durch entsprechende Schraffuren die Matrize 40 mit eingesetztem Friktionsteil, deren Verbindungsvorsprünge 44 in die Stabilisierungsnuten 20 der Patrize 10 eingreifen und deren Planflächen an den entsprechenden ebenen Flächen des Befestigungsteils der Patrize anliegen. Ausserdem ist der Umriss des Prothesenzahns 52 gezeigt, der aber nicht in der Schnittebene, sondern darüber liegt.

Das erfindungsgemässe Geschiebe besitzt weitere, überraschende Vorteile. Durch die besondere Formgebung der Matrize und des Befestigungsteils der Patrize wird eine innige Verbindung an mehreren Flächen, insbesondere aber durch das Zusammenwirken der Flächen 44 und 20 erreicht, so dass die Lateralkräfte auf das Geschiebe zuverlässig aufgenommen werden. In aller Regel ist daher kein Umlauf erforderlich. Durch die besondere Konstruktion der beschriebenen Stabilisierungselemente kann eine sonst erforderliche sogenannte Umlauf-Fräsung umgangen werden. Ausserdem müssen die genannten Verbindungsvorsprünge nicht individuell erzeugt und angepasst werden. Das Geschiebe lässt sich schnell eingliedern und auch wieder trennen, wobei die Friktion, wie schon erwähnt, einstellbar ist. Sollten die Friktionskräfte nachlassen, so kann das Friktionsteil in der Matrize schnell durch ein Teil mit etwas kleinerem, d.h. engerem Innendurchmesser ersetzt werden.

## Patentansprüche

1. Extracoronales Geschiebe mit einer an einem Festzahn (12) anbringbaren Patrize (10) und einer auf die Patrize schiebbaren Matrize (40), an der ein Prothesenteil (52) angebracht ist, wobei die Patrize (10) aus einem im wesentlichen blockförmigen Befestigungsteil (16) und einem Retentionsteil (14) besteht und die Matrize (40) die Form eines gegen die Patrize seitlich offenen Gehäuses besitzt und in die Matrize (4) ein seitlich offenes, hülsenförmiges Friktionsteil (30) aus mundbeständigem Kunststoff eingesetzt ist, welches eine Friktionsverbindung mit dem Retentionsteil (14) der Patrize (10) bildet und mit einem bei der Herstellung des Geschiebes verwendeten Dublierhilfsteil identisch ist, dadurch gekennzeichnet, dass die Matrize (40) zur form- und kraftschlüssigen Verbindung mit der Patrize (10) axiale Verbindungsleisten (44), die in entsprechende Stabilisierungsnuten (20) am blockförmigen Befestigungsteil (16) der Patrize (10) passen und in diese eintreten, sowie zueinander passende Anlageflächen (22, 23) am Befestigungsteil (16) der Patrize und entsprechende Flächen (46, 48) an der Matrize aufweist, wobei die axialen Verbindungsleisten (44) und die Stabilisierungsnuten (20) einen im wesentlichen kreissegmentförmigen Querschnitt haben, dessen Bogenlänge kleiner als der halbe Kreisumfang ist.

2. Geschiebe nach Anspruch 1, dadurch gekennzeichnet, dass ein Satz von Friktionsteilen vorliegt, deren Aussendurchmesser im wesentlichen gleich, deren Innendurchmesser aber jeweils kleiner sind, wodurch die Friktionskräfte zwischen Patrize und Matrize durch Einsetzen des gewünschten Friktionsteils wählbar sind.

3. Geschiebe nach Anspruch 1 oder 2, dadurch gekennzeichnet, dass der Aussendurchmesser des Friktionsteils (30) mit dem Innendurchmesser der Matrize (40) und der Innendurchmesser des Friktionsteils (30) mit dem Aussendurchmesser des Retentionsteils (14) der Patrize (10) mindestens annähernd übereinstimmen.

4. Geschiebe nach einem der Ansprüche 1 bis 3, dadurch gekennzeichnet, dass der Retentionsteil (14) der Patrize (10) die Form eines Kreiszylinders (17) hat, der über einen Steg (19) mit dem Befestigungsteil (16) der Patrize verbunden ist.

5. Verfahren zur Herstellung eines Geschiebes nach einem der Ansprüche 1 bis 4, bei dem ein Duplikatmodell des Geschiebes mit Hilfe eines über die bereits fertige Patrize gesteckten, seitlich offenen, hülsenförmigen Dublierhilfsteils (30) angefertigt wird, wobei das Dublierhilfsteil aus einem nicht ausbrennbaren, mundbeständigen Kunststoff besteht, vor der Gewinnung des entsprechenden Einbettmassemodells von der Patrize abgezogen und am fertigen Geschiebe als in die Matrize eingeschobenes Friktionsteil (30) verwendet wird, dadurch gekennzeichnet, daß an der Patrize Stabilisierungsnuten (20) und an der Matrize in diese Nuten passende axiale Verbindungsleisten (44) gefertigt werden, die in entsprechende Stabilisierungsnuten (20) am blockförmigen Befestigungsteil (16) der Patrize (10) passen und in diese eintreten, daß zueinander passende Anlageflächen (22, 23) am Befestigungsteil (16) der Patrize und entsprechende Flächen (46, 48) an der Matrize gefertigt werden, und daß die axialen Verbindungsleisten (44) und die Stabilisierungsnuten (20) mit einem im wesentlichen kreissegmentförmigen Querschnitt versehen werden, dessen Bogenlänge kleiner als der halbe Kreisumfang ist.

## Claims

1. Extracoronal attachment including a male member (10) which is attachable to a solid denture (12) and a female member (40) which is slidable onto said male member and to which a prosthesis portion (52) is attached, the male member (10) consisting of an essentially block-shaped fastening portion (16) and of a retention portion (14) while the female member (40) has the shape of a shell which is laterally open on the side of the male member and a laterally open, sleeve-shaped friction portion (30) of an orally stable synthetic material is inserted in the female member (4) which forms a frictional connection with the retention portion (14) of the male member (10) and is identical to a duplicating aid which is used in the preparation of the attachment, characterised in that the female member (40) comprises axial connecting beads (44) which provide a form-fit and a positive connection with the male member (10) and fit into corresponding stabilising grooves (20) of the block-shaped fastening portion (16) of the male part (10) and enter in the same, as well as matching contact surfaces (22, 23) of the fastening portion (16) of the male member and corresponding surfaces (46, 48) of the female member, the cross-section of the axial connecting beads (44) and the stabilising grooves (20) essentially having the shape of a circle segment whose arc length is smaller than half the circle circumference.

2. Attachment according to claim 1, characterised in that a set of friction portions is provided whose external diameters are essentially equal but whose internal diameters are successively smaller, whereby the frictional forces between the male and the female members are capable of being determined by inserting the desired friction portion.

3. Attachment according to claim 1 or 2, characterised in that the external diameter of the friction portion (30) and the internal diameter of the female member (40) as well as the internal diameter of the friction portion (30) and the external diameter of the retention portion (14) of the male member (10) conform to each other at least approximately.

4. Attachment according to any one of claims 1 to 3, characterised in that the retention portion (14) of the male member (10) has the shape of a circular cylinder (17) which is connected to the fastening portion (16) of the male member by means of a web (19).

5. Method for the preparation of an attachment according to any one of claims 1 to 4, according to which a duplicate model of the attachment is produced by means of a laterally open, sleeve-shaped duplicating aid (30) which is slid over the already finished male member, the duplicating aid consisting of a heat-unerodable, orally stable synthetic material, is retired from the male member before the corresponding embedding material model is produced, and used as a friction portion (30) which is inserted in the female member, characterised in that stabilising grooves (20) are made in the male member and matching axial connecting beads (44) in the female member which fit into corresponding stabilising grooves (20) of the block-shaped fastening portion (16) of the male member and enter in the same, in that matching contact surfaces (22, 23) of the fastening portion (16) of the male member and corresponding surfaces (46, 48) of the female member are produced, and in that the axial connecting beads (44) and the stabilising grooves (20) are provided with essentially circle segment-shaped cross-sections whose arc length is smaller than half the circle circumference.

## Revendications

1. Attachement extracoronaire comprenant une partie mâle (10) attachable à une dent solide (12) et une partie femelle (40) qui est enfichable sur la partie mâle et à laquelle est fixé un élément de prothèse (52), la partie mâle consistant d'un élément de fixation (16) en forme de bloc essentiellement et d'un élément de rétention (14), alors que la partie femelle (40) présente la forme d'une enveloppe latéralement ouverte sur le côté de la partie mâle, et un élément de friction (30) latéralement ouvert en forme de douille en matière synthétique oralement stable est inséré dans la partie femelle (40), ledit élément formant avec l'élément de rétention (14) de la partie mâle une connexion par friction et étant identique à un élément auxiliaire de doublage utilisé au cours de la fabrication de l'attachement, caractérisé en ce que la partie femelle (40) présente, pour assurer une connexion géométrique et un engagement positif avec la partie mâle (10), des nervures de connexion (44) axiales ajustées à des rainures de stabilisation (20) correspondantes de l'élément de fixation (16) en forme de bloc de la partie mâle (10) et qui rentrent dans celles-ci, ainsi que des surfaces de contact mutuellement ajustées (22, 23) de l'élément de fixation (16) de la partie mâle et des surfaces correspondantes (46, 48) de la partie femelle, la coupe transversale des nervures de connexion (44) axiales et des rainures de stabilisation (20) présentant la forme de segments de cercle essentiellement dont la longueur de l'arc est inférieure à la moitié de la circonférence du cercle.

2. Attachement selon la revendication 1, caractérisé en ce qu'un jeu d'éléments de friction est prévu dont les diamètres extérieurs sont essentiellement égaux mais les diamètres intérieurs décroissent successivement, ce qui permet de déterminer les forces de friction entre la partie mâle et la partie femelle en insérant l'élément de friction désiré.

3. Attachement selon la revendication 1 ou 2, caractérisé en ce que le diamètre extérieur de l'élément de friction (30) correspond au diamètre intérieur de la partie femelle (40) et le diamètre intérieur de l'élément de friction (30) correspond au diamètre extérieur de l'élément de rétention (14) de la partie mâle (10) au moins approximativement.

4. Attachement selon l'une quelconque des revendications 1 à 4, caractérisé en ce que l'élément de rétention (14) de la partie mâle (10) présente la forme d'un cylindre circulaire (17) qui est relié à l'élément de fixation (16) de la partie mâle par l'intermédiaire d'une âme (19).

5. Procédé pour la production d'un attachement selon l'une quelconque des revendications 1 à 4, dans lequel un modèle de duplication de la prothèse est préparé à l'aide d'un élément auxiliaire de doublage (30) latéralement ouvert en forme de douille qui est enfiché sur la partie mâle déjà finie, l'élément auxiliaire de doublage consistant en une matière synthétique résistante au feu et oralement stable, retiré de la partie mâle avant l'obtention du modèle de matière d'encastrement correspondant et utilisé dans la prothèse finie en tant qu'élément de friction (30) qui est enfiché dans la partie femelle, caractérisé en ce que des rainures de stabilisation (20) sont réalisées dans la partie mâle et des nervures de connexion (44) axiales ajustées à ces rainures sont produites sur la partie femelle, lesdites nervures étant ajustées à des rainures de stabilisation (20) correspondantes dans l'élément de fixation (16) en forme de bloc de la partie mâle et rentrant dans ces dernières, en ce que des surfaces de contact mutuellement ajustées (22, 23) de l'élément de fixation (16) de la partie mâle et des surfaces correspondantes (46, 48) de la partie femelle sont produites, et en ce que les nervures de connexion (44) axiales et les rainures de stabilisation (20) sont pourvues d'une coupe transversale en forme de segment de cercle essentiellement dont la longueur de l'arc est inférieure à la moitié de la circonférence du cercle.
